# EUROPEAN PATENT APPLICATION

(11) **EP 1 921 852 A1**
(43) Date of publication of application: **14.05.2008**
(21) Application number: 06123641.0
(22) Date of filing: 07.11.2006
(51) Int. Cl.: H04N 5/76

(54) **Sharing Television Clips**

(71) Applicant: Microsoft Corporation, Redmond WA 98052 (US)
(72) Inventor: REGAN, TIMOTHY, Cambridge, Cambridgeshire CB3 0FB (GB); HARPER, RICHARD, Cambridge, Cambridgeshire CB3 0FB (GB)
(74) Representative: Wallis, Helen Frances Mary

(57) **Abstract**

Methods, software and apparatus are described which enable users to share and exchange clips from broadcast media using their mobile devices. Whilst watching broadcast media, a user can cause their mobile device to capture a clip, for example by pressing a button. The capture of the clip enables the user to show and share the clip with friends as part of a system of exchange.

## Description

### BACKGROUND

Certain segments of television programmes are often the centre of discussions between friends and acquaintances despite the fact that it is not easy to watch these segments from television programmes again when these discussions take place. Broadcasters may make a limited selection of clips available for viewing from their websites. These clips may be segments from programmes already broadcast or alternatively they may be trailers for future programmes. However, it is only possible to view these clips if the user has access to an internet enabled PC at that moment in time.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

Methods, software and apparatus are described which enable users to share and exchange clips from broadcast media using their mobile devices. Whilst watching broadcast media, a user can cause their mobile device to capture a clip, for example by pressing a button. The capture of the clip enables the user to show and share the clip with friends as part of a system of exchange.

The present example provides a method of capturing media clips on a mobile device comprising: in response to a user input received by the mobile device, identifying a media clip for capture; accessing clip data for the identified media clip; and storing the clip data on the mobile device.

The method may further comprise: providing an interface for navigation to and selection of a clip stored on the mobile device.

Identifying a media clip for capture may comprise: determining a time of the user input; and identifying the media clip based on the time of the user input.

Identifying a media clip for capture may further comprise: determining a broadcast channel being watched by the user, wherein the media clip is identified based on the time of the user input and the broadcast channel.

The clip data may comprise a media file for the identified media clip and wherein accessing clip data for the identified media clip may comprise: accessing the media file for the identified media clip.

Accessing the media file for the identified media clip may comprise: receiving the media file over a broadcast channel.

Accessing the media file for the identified media clip may comprise: downloading the media file from a server.

The method may further comprise: in response to a user input received by the mobile device selecting the identified clip, playing the media file.

The clip data may further comprise a representative still image for the clip.

The method may further comprise: in response to a user input received by the mobile device selecting a stored clip, transmitting the stored clip to another mobile device over a wireless link.

The method may further comprise: accessing a licence for the identified clip.

A second aspect provides a computer program comprising computer program code means adapted to perform some or all the steps of any of the methods described herein when said program is run on a computer.

The computer program may be embodied on a computer readable medium.

A third aspect provides a mobile device comprising: a processor; a wireless transmitter and receiver; a user input means; a display; and a memory arranged to store executable instructions arranged to cause the processor to: identify a media clip for capture in response to receipt of an input via the user input means; access clip data for the identified media clip; and store the clip data in the memory.

The memory may be further arranged to store executable instructions arranged to cause the processor to: access a licence for the identified media clip.

The memory may be further arranged to store executable instructions arranged to cause the processor to: provide an interface for navigation to and selection of a clip stored on the mobile device.

The memory may be further arranged to store executable instructions arranged to cause the processor to: transmit a stored clip to a second mobile device via the wireless transmitter in response to a user input received via the user input means, the input identifying the stored clip.

A fourth aspect provides a method of enabling capture of media clips on a mobile device comprising: generating a plurality of clips from broadcast media; and distributing the plurality of clips to mobile devices.

Distributing the plurality of clips to mobile devices may comprise: storing the plurality of clips on a server; and in response to a request from a mobile device, downloading one of the plurality of clips from the server to the mobile device.

Distributing the plurality of clips to mobile devices may comprise: selecting at least two of the plurality of clips; dividing each of the selected clips into a plurality of blocks; and sequentially broadcasting one of the plurality of blocks from each of the selected clips.

Further aspects provide one or more device-readable media with device-executable instructions for performing methods described herein, a system for distribution of clips and methods for generating clips.

The methods described herein may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is an example flow diagram of a method which allows the sharing of clips from broadcast audio-visual material;
FIG. 2 shows an example flow diagram of the capture of the clip data in more detail;
FIG. 3 is a schematic diagram of a system which allows the capture of clip data;
FIG. 4 is a schematic diagram of a second system which allows the capture of clip data;
FIG. 5 shows an example flow diagram of the operation of the system of FIG. 4;
FIG. 6 is a schematic diagram of a third system which allows the capture of clip data;
FIG. 7 is a schematic diagram showing the operation of a broadcast carousel;
FIG. 8 is a schematic diagram of a clip;
FIG. 9 shows a flow diagram for an example method of broadcasting clips;
FIG. 10 shows one of the steps of the method of FIG. 9 in more detail; and

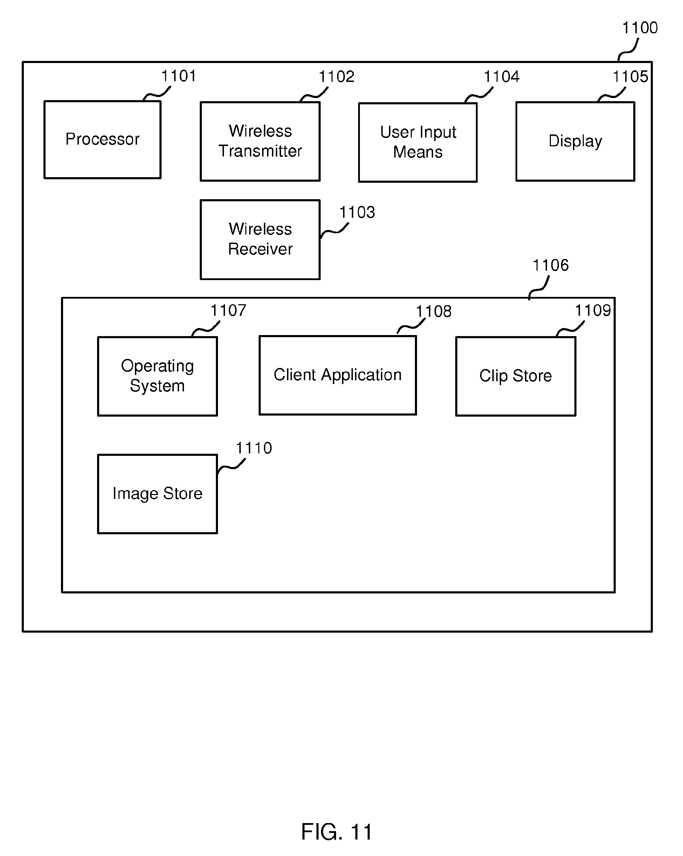

FIG. 11 shows a schematic diagram of a mobile device suitable for implementation of the methods described herein.
Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

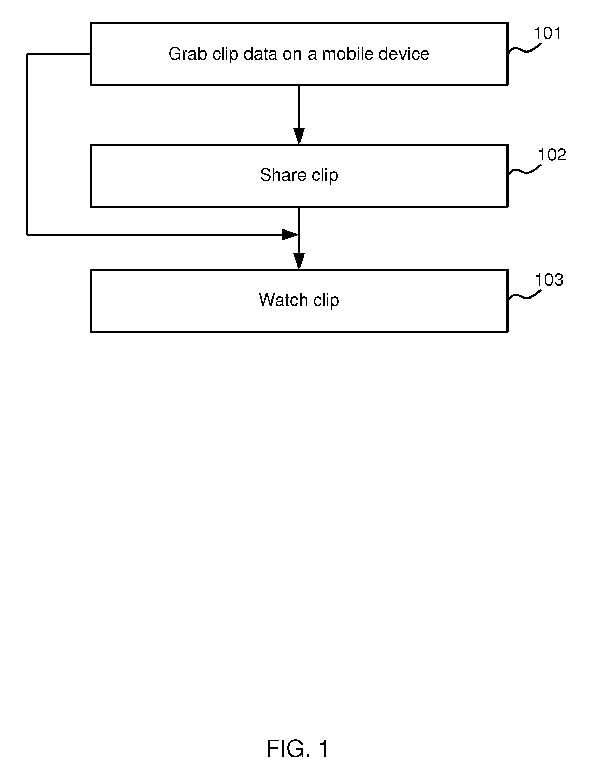

FIG. 1 is an example flow diagram of a method which allows the sharing of clips from broadcast audio-visual material (such as television programs) between people (e.g. a group of friends). The method enables a clip of the broadcast audio-visual material which may be being watched on a television, PC or other device to be grabbed (or captured) by a mobile device (step 101) e.g. a mobile telephone or PDA (personal digital assistant). The grabbing (or capture) of the clip may be initiated by the user of the mobile device who is watching television by pressing a button on the mobile device (e.g. a hot key, a soft key, a special key on the keypad etc), on the media device (e.g. the set-top box, television, PC, touch sensitive display etc being used to watch the television broadcast) or on a peripheral device associated with the media device or the mobile device (e.g. keyboard, mouse, remote control). The grabbed clip may be watched on the mobile device by one or more people (step 103) and / or be transferred to another mobile device (step 102) in order that others can share in the viewing experience. Clips may also be exchanged with other people. The method steps and the ways in which clips may be generated are described in more detail below.

This method provides an easy means by which clips from broadcast material can be shared and exchanged which does not require use of a PC. The clip data may be grabbed substantially in real time (whilst the user is watching the broadcast) and subsequently shared with other people.

In some examples, it may be beneficial to control the access to clips (e.g. the watching of clips). Digital rights management methods which may be implemented with the methods described herein are also described below.

### Clip Generation

There are a number of different ways in which clips may be generated such that they can be grabbed by a mobile device and shared between people and mobile devices, as shown in FIG. 1. Clips may be generated locally to the mobile device (i.e. by the media device which is being used to display the broadcast television) or may be generated by the broadcaster, distributor or creator of the television programme. In another example, the clips may be created or modified by users. The clips may be generated in real time (e.g. in response to a user initiating the grabbing of a clip) or may be generated in advance of the broadcast of the programme.

In a first example, the clips may be produced by dividing the broadcast into a number of regular overlapping clips, which may all be the same length or may be of different lengths. In an example the clips may all be two minutes long and may start at one minute intervals. In another example the clips may all be one minute long and start at 30 second intervals. In some examples, the length of the clips that are used may be selected based on the method by which the clips are transmitted to the mobile device, such that a user may receive the clip in a reasonable period of time, whilst not obviating the selection and capture of the desired segment. For example, if a high bandwidth connection is used to transmit clips to a mobile device, longer clips may be acceptable, however if the transmission is via a low bandwidth connection (e.g. GPRS, General Packet Radio Service) it may be necessary to use shorter clips such that they can be received within a reasonable time period and therefore without degrading the overall user experience. Whilst this method may be easily implemented, users' expectations of the duration of a clip may not be met by the process.

In a second example, the clips may be created based on annotations to the content. These annotations may be made by the programme makers or editors of the content. These annotations may comprise metadata associated with the content which contains the start times and durations of any clips which are to be made available for downloading to mobile devices. Whilst this method offers a high fidelity of the artistic intention of the programme makers, it requires considerable investment of time and effort to create the annotations.

In a third example, the clips may be created using machine intelligence techniques by which the broadcast media may be processed and divided into clips intelligently. The intelligence may look at elements of the video (e.g. to detect scene changes), the audio or any metadata which is available (e.g. subtitles) to decide where clips may start and end. This processing of the broadcast media may take place prior to the actual broadcast, in parallel with the broadcast or subsequent to the broadcast of the content. Whilst use of machine intelligence may provide an automatic method of generating clips that coincide with users' expectations of where a scene of interest starts and ends, it may be very processor intensive and therefore the processing may take a long time. Where the processing is done in advance of the broadcast, the time taken to process the content and generate the clips may not impact user experience.

### Capture of clip data by a mobile device

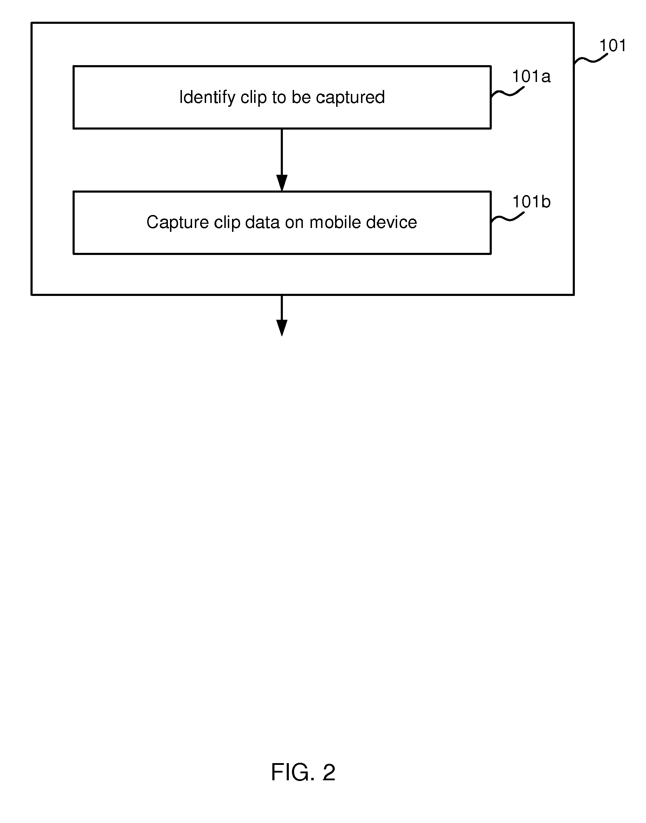

FIG. 2 shows an example flow diagram of the grabbing (or capture) of the clip data (step 101 of FIG. 1) in more detail. The clip data may comprise the clip itself (e.g. a video file in any suitable format) or an identifier for the clip, such as the address of the clip (e.g. a URL, uniform resource locator). The method involves identifying the clip to be captured (step 101 a) and then capturing the clip data for the identified clip on the mobile device (step 101 b). These two steps are described in more detail below.

The capture of the clip data by a mobile device may be performed substantially in real time whilst the user is watching the broadcast media. Whilst the user may be watching the broadcast at the time of broadcast, the user may alternatively be watching a time shifted version of the broadcast media (e.g. delayed by a few minutes using a personal video recorder).

The identification of the clip (in step 101 a) may be automatic or may require some user input. In order to identify the appropriate clip, the channel being watched by the user is identified. This channel may be determined in any manner including:
- Use of a default channel: In such an example, the default channel may be pre-set by the user, factory set or otherwise, e.g. the default channel may be set to Sky One or BBC1.
- Asking the user: In such an example, a prompt may be displayed to the user on the mobile device requesting them to identify the channel they are watching. This prompt may be displayed to the user when they initiate the grabbing of a clip or may be periodically displayed to the user.
- Communication with the media device: The mobile device may interrogate the media device (e.g. the television, set-top box, PC etc) which is being used by the user to watch the broadcast programme to determine the channel being watched. Alternatively, the media device may transmit a signal which is received by the mobile device (where the signal is not necessarily transmitted in response to an interrogation message from the mobile device).
- Analysis of audio: The mobile device may detect the audio from the television speakers (or other speakers being used to play the audio track for the broadcast programme) and then analyse this to determine which channel is currently being watched (e.g. by comparison to the audio of current broadcast streams). The analysis may be performed on the mobile device or alternatively, a recorded segment of the audio may be transmitted to a server for analysis to determine the channel being watched. This analysis may use techniques to compare audio or alternatively may use speech recognition and then textual comparison (e.g. with the subtitles for programmes currently being broadcast).
- Analysis of video: The mobile device may capture an image from the broadcast television programme and analyse this (in a corresponding manner to the audio analysis described above) to determine which channel or programme is currently being viewed.

Having identified the channel, as described above, the clip to be captured can be identified. This clip may be selected from the generated clips (as described above) based on the identified channel and the time that the user initiated the grabbing of the clip (referred to herein as the 'grab time'). In a first example, the clip may be selected such that the grab time is close to the midpoint of the clip, e.g. where clips are regularly generated starting every 30 seconds and lasting one minute, a clip may be selected which most closely matches the situation where the start time is 30 seconds before the grab time. In a second example, the clip may be selected such that the start time is a close as possible to the grab time whilst being before the grab time. Although a clip may be selected such that the start time is after the grab time, a clip having a start time before the grab time is more likely to meet the user's expectation as the grab is likely to be initiated in response to seeing an item of interest (e.g. a football goal) rather in advance of the item of interest. In a further example, the clip may be selected to be "the current clip" based on the grab time.

The capturing of the identified clip data (in step 101 b) may be done in many different ways and this may be done locally on the mobile device or by the mobile device in communication with a server (or other network element) or the media device. Different methods may be used dependent on whether the clip data comprises the clip itself (e.g. the video data) or an identifier for the clip (such as an address where the clip can be accessed). Where the clip data comprises an identifier, the clip itself may be subsequently downloaded by the mobile device before the clip is shared or exchanged (e.g. prior to the share step 102 or the watch step 103).

In a first example, the clip data may be captured locally on the mobile device by storing an address (e.g. a URL) of the identified clip (e.g. based on the channel and the grab time). For example, the address may be of the form:
www.microsoft.com/tvclips/[channel]/[grab time]
The address may be determined using an Electronic Programme Guide (EPG) running on the mobile device, such as a TV Anytime EPG. The EPG may store addresses for each programme, for each channel or for each clip. The address may be determined by communicating with a remote server (e.g. via the mobile network).

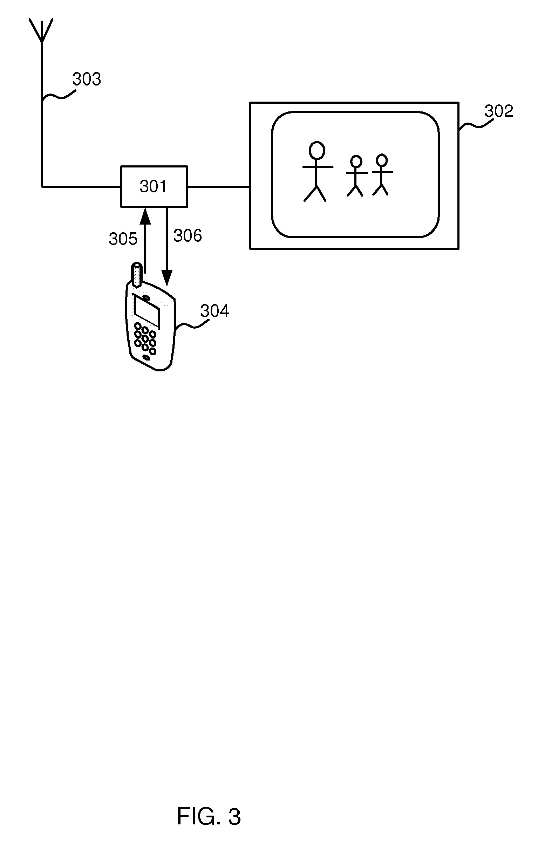

In a second example, the clip data may be downloaded by the mobile device from the media device, as shown in FIG. 3. FIG. 3 is a schematic diagram showing a media device 301 (such as a PC or set-top box) connected to a display device 302 (such as a monitor or television). The media device 301 receives the broadcast television (e.g. via an aerial 303, cable or other means). This media device 301 may transmit the clip data (i.e. the clip itself or an address for the clip) to the mobile device 304 (as indicated by arrow 306) in response to a request received from the mobile device (as indicated by arrow 305). This request may have been sent to the media device as part of identifying the clip to be captured (in step 101 a), as described above. For example, when a user initiates the grabbing of a clip via their mobile device 304, the mobile device may send a message to the media device in order to identify the clip to be captured (in step 101 a) and this message may simply request the current clip or may include more information or requests. In response to this request, the media device may send the clip data to the mobile device (in step 101 b). The messages sent between the media device and the mobile device may use any suitable technology, including, but not limited to, Bluetooth, IrDA (Infrared Data Association) and WiFi (Wireless Fidelity). Where the clip itself (rather than an address) is transmitted to the mobile device, the clip may be transmitted in a format suitable for display on the mobile device, which may require some transcoding by the media device. In another example, the clip may be transmitted in a standard format to the mobile device and any required transcoding for display on the mobile device may be performed by the mobile device.

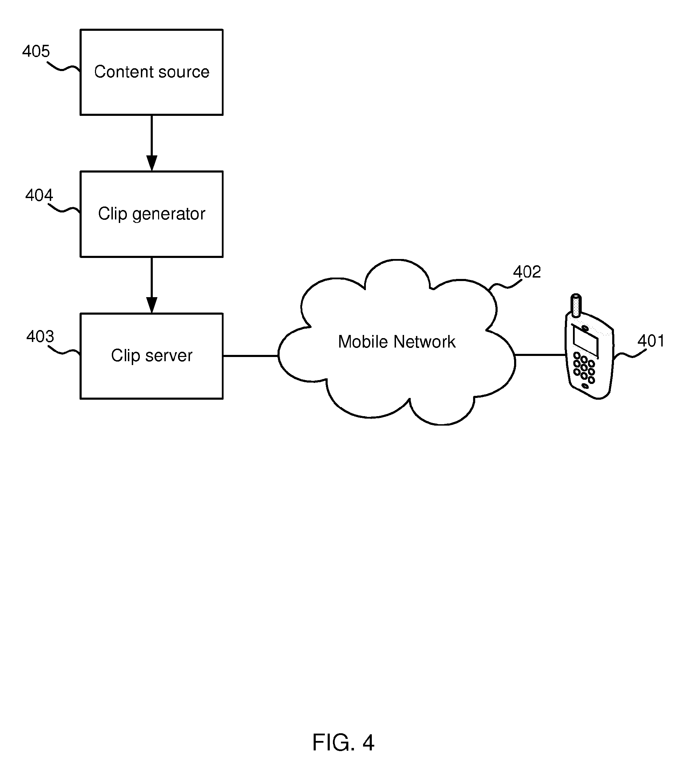

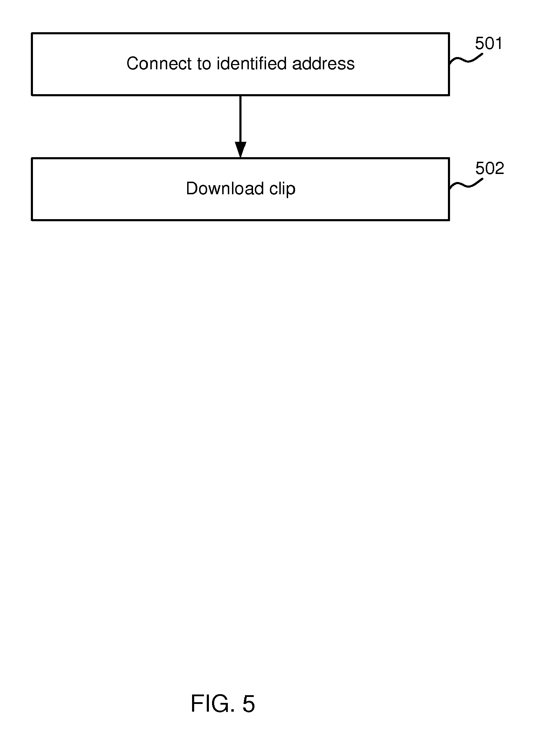

In a third example, the clip data may be downloaded onto the mobile device over a point to point network, as can be described with reference to FIGS. 4 and 5. FIG. 4 shows a mobile device 401 connected to a mobile network 402 (e.g. a 3G (third generation) or GPRS network). Also connected to the mobile network 402 is a clip server 403 (which may be a web server or other server) from which the mobile device 401 accesses the clips via a point to point link across the network 402. The clip server 403 obtains the clips from a clip generator 404 which is connected to the content source 405. As shown in the example flow diagram of FIG. 5, the mobile device 401 connects to the identified address (step 501) which relates to clip server 403 and downloads the identified clip from the clip server (step 502). The identified address may be determined from an EPG on the mobile device (as described in the first example above), may be a default URL based on the channel being watched (as described above) or may be determined in any other way. As described above, the clip may be downloaded in a format suitable for display on the mobile device or may require subsequent transcoding on the mobile device. In an example, several variants of the same clip may be available on the web server and the variant for download may be selected based on the mobile device type, the bandwidth of the point to point link across the network or any other parameter.

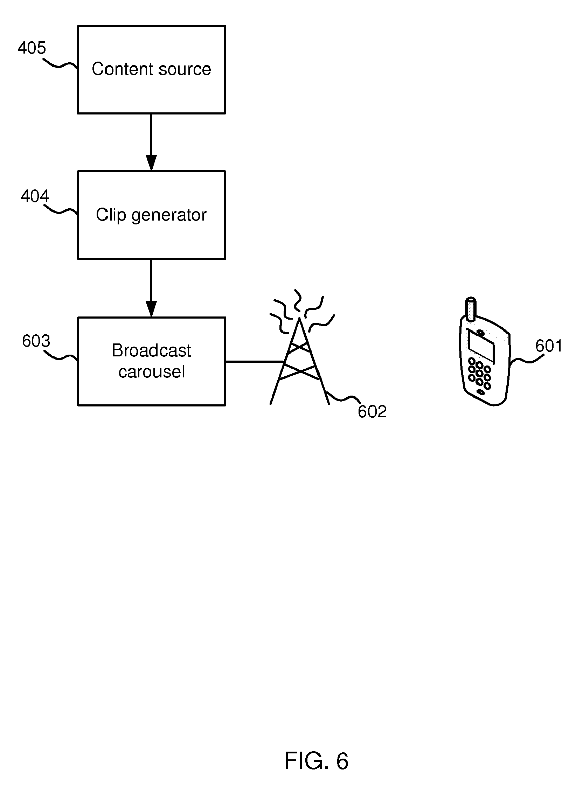

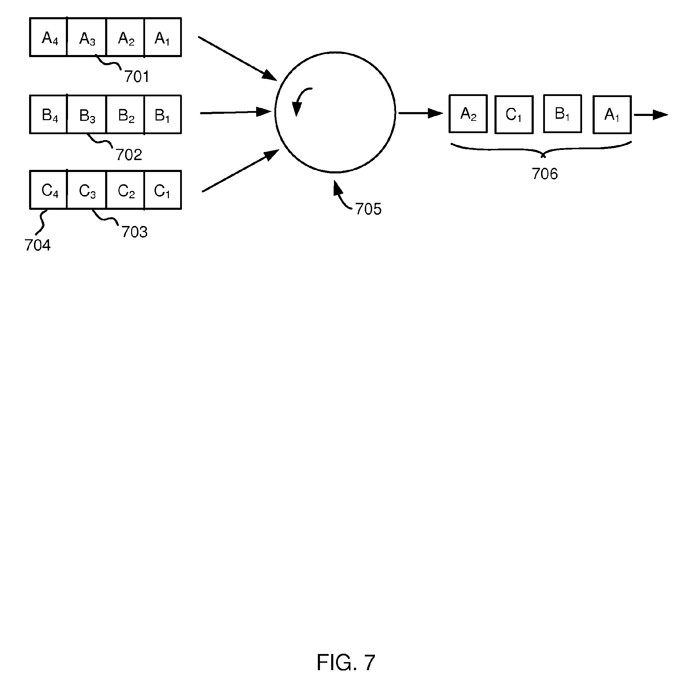

In a fourth example, the clip data may be received by the mobile device from a broadcast transmission, as can be described with reference to FIG. 6. FIG. 6 shows a mobile device 601 which is able to receive broadcast transmissions, such as those from transmitter 602. Clips are generated by a clip generator 404 from a source of content 405 as described above and these clips are then broadcast via transmitter 602. A carousel 603 may be used to transmit multiple clips substantially simultaneously. An example of the operation of a carousel can be described with reference to FIG. 7. FIG. 7 shows a schematic diagram in which there are three clips for transmission 701-703, clips A, B and C. Each clip is divided into a number of segments 704 (four segments in the example shown labelled A1-A4, B1-B4 and C1-C4). One segment from each clip in turn is fed into the carousel 705 such that segments from each clip are interleaved for transmission 706. In this example, the mobile device therefore captures and stores the broadcast segments of the identified clip (from step 101 a) and reassembles the clip from the received segments. The clips may be broadcast in any suitable format, including but not limited to DVB-H (Digital Video Broadcasting - Handheld) and DAB-IP (Digital Audio Broadcasting - Internet Protocol) and clips may be broadcast substantially simultaneously in multiple formats (e.g. DVB-H and DAB-IP or using different encoding suitable for different screen sizes etc).

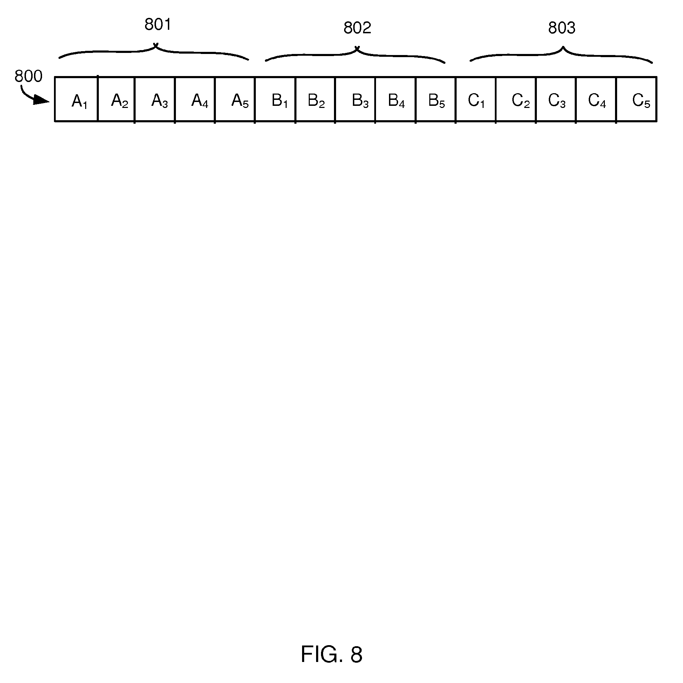

Instead of using the carousel technique described above with reference to FIG. 7, the clips may be downloaded in segments using a method of progressive content download as described in co-pending European Patent Application No. 06270028.1, filed 28 February 2006, entitled "Progressive Downloading", which is incorporated herein by reference. According to this method, the content (i.e. the clip) being downloaded is divided into a plurality of segments where each segment comprises a plurality of blocks. The progressive downloading occurs by selecting a segment from the plurality of segments based on a first selection function such that the plurality of segments are downloaded substantially sequentially to the node and selecting a block from the selected segment based on a second selection function. The selected block from the selected segment is then broadcast. This method is described in more detail below with reference to FIGS. 8-10. Where more than one clip is to be broadcast substantially simultaneously, a block from each clip may be selected and broadcast in sequence e.g. a block from clip A, followed by a block from clip B, followed by a block from clip C etc.

In the above broadcast techniques (described with reference to FIGS. 6-10) where multiple clips are broadcast substantially in parallel, each clip may be broadcast with equal priority (e.g. one block from clip A followed by one block from clip B, followed by one block from clip C, followed by one block from clip A etc). However, the priority for broadcast time / capacity may be varied between clips based on popularity, age or any other parameter. For example, popular clips may be given a larger proportion of the broadcast time (e.g. two blocks from clip A followed by one block from clip B, followed by one block from clip C, followed by two blocks from clip A etc, where block A is very popular), or newer clips may be given a larger proportion of the broadcast time. By giving these newer / more popular clips a larger share of the broadcast time, mobile devices will be able to receive the clips faster. The popularity of a block may be determined based on the number of times it is grabbed or shared (e.g. as determined by the number of licences issued) or any other feedback mechanism.

Having downloaded the clips using any method described above, the clips may be stored in a clip library within the mobile device.

### Sharing of the clip data

Having captured and stored the clip data on the mobile device, as described above, the clip may then be watched (step 103) and / or shared (step 102). As described above, the clip data may comprise the clip itself or an identifier for the clip (e.g. an address such as a URL). As described above, where the clip data comprises an identifier rather than the clip itself, the clip itself may be downloaded (e.g. as described above) and stored locally on the mobile device. The locally stored clip may then be shared or exchanged between mobile devices.

In a first example, the clip (e.g. the media file stored locally on the mobile device) may be shared by transferring it to another mobile device via a wireless link such as Bluetooth or IrDA. The transfer may occur as a pushed message, via SMS (Short Message Service) or MMS (Multimedia Message Service) or using any other technique (e.g. email, instant messenger, WAP (Wireless Application Protocol) push etc).

In a second example, the object that is shared by transferring it to another device may be the identifier (such as a URL) for the clip rather than the clip itself. Upon receiving the identifier, the receiving device may automatically access the clip itself, download it and store it locally on the receiving device. Accordingly, the user experience is substantially the same as if the clip itself had been transferred between devices. This method may, for example, be used where it is not possible to use the first example method for any reason (e.g. available bandwidth, device capabilities etc).

In the first example above, the clip captured by the mobile device and the clip transferred to another mobile device (in step 102) are substantially the same. However, in other examples this may not be the case. For example, whilst the mobile device may have downloaded the clip via a point to point link or broadcast transmission (as shown in FIGS. 4-6), the mobile device may only transfer an address (or other identifier) for the clip to another mobile device. This results in less data being transferred between mobile devices but requires the recipient mobile device to separately download the clip, for example using one of the methods described above. As described above, this downloading of the clip by the receiving device may be performed automatically upon receipt of the address or other identifier for the clip.

In the examples described above, the sharing of the clip does not affect the clip itself, such that the clip watched on the second mobile device is substantially the same as the clip watched on the mobile device which shared the clip with the second mobile device (although some format / coding changes may be required where the devices have different screen sizes etc). However, in some examples, the clip itself may be altered when it is shared (i.e. the clip captured in step 101 is altered on sharing in step 102). Possible changes to the clip include the addition of a logo or other mark to indicate that the clip has been shared (e.g. the logo of the manufacturer of the client application, the logo of the broadcaster etc) and / or a reduction in the length of the clip and / or the quality of the clip such that the number of times a clip can be shared is effectively limited. In another example, the clip may be encrypted (as described below).

It will also be appreciated that the clip captured by the mobile device (in step 101) may itself not be identical to the excerpt from the broadcast programme. For example, a logo or other mark may be added to indicate the source of the clip and / or that the clip has been legitimately obtained.

### Watching the clip

The clip may be watched (in step 103) on the mobile device which initially captured the clip (e.g. mobile device 301, 401, 601) and it may be watched on any mobile device to which the clip data has been transferred (in the sharing step 102 described above). In order to watch the clip, the clip may be played using a media player application on the mobile device. This media player may be a custom media player which is integrated within an application which also enables browsing of all the clips which have been captured or received (e.g. shared by another mobile device) by the mobile device. The application is described in more detail below.

Where the clip data comprises the address or other identification information for a clip and not the clip itself, the clip must be downloaded prior to being watched. This download process may use any of the methods described above, for example those described with reference to FIGS. 4-6. This download process may occur automatically upon receipt of the address or other identifier for the clip.

### Representative still images

In addition to comprising either the clip itself or an identifier for the clip, the clip data may also comprise a representative still for the clip. This representative still may be generated at the same time as the clip is generated or may be generated separately (e.g. by the organisation that provides the clips for download / broadcast or by an intermediary). The representative still image may be selected based on position within the clip (e.g. first, last, middle) or may be selected using image selection / comparison techniques. In other examples, the representative image may be selected manually. In a further example, the representative image may not comprise a still image selected from the clip, but may instead comprise data about the clip (e.g. title, date, time, programme name, logo etc).

In other examples, the representative image may not be downloaded along with (or separately to) the clip itself but may instead be generated on the mobile device, for example using any of the methods described above. Once generated on a first mobile device, the representative still image may be transferred as part of (or along with) the clip upon sharing or alternatively the representative still image may be separately generated on the receiving mobile device.

The representative still image may be used in an application which runs on the mobile device and presents a library of clips to the user such that the user can select a clip to share or to watch.

### Digital Rights Management

In some applications it may be important to control who has permission to capture, share and / or watch clips of broadcast television. In such an example, it may be necessary for a user to obtain a licence before they are able to watch a captured clip and the media player application may prevent playing of the clip without such a licence (or other form of certificate). In other applications, the use of licences may enable the popularity of clips to be monitored and provide feedback to the system. The system may then respond to this feedback by enabling faster download / reception of the clips by mobile devices or by increasing the period of time over which a clip is available.

Where the clip is downloaded to a mobile device from a media device (as described above with reference to FIG. 3), the licence may be obtained from the media device or may need to be obtained across a network (e.g. via GPRS) from a network element (e.g. a web server operated on behalf of the content owner or the broadcaster). Where the clip is downloaded over a point to point link, the licence may be obtained from the server along with the clip or may need to be obtained separately (as described above). Where the clip is downloaded via a broadcast technology, the required licence may need to be downloaded across a network (as described above).

When a clip is transferred from one mobile device to another mobile device, the licence may be transferred with the clip, or alternatively the recipient of the clip may need to obtain a new licence (e.g. by downloading it across a network as described above). Where the licence is transferred on sharing the clip, the number of times that the clip can be shared before a new licence is required may be limited (e.g. sharing once is permitted only).

In an example, the clip may be downloaded and / or transferred in encoded format such that without the licence (and associated decryption key), the clip cannot be watched.

### Availability of clips for download

Given the finite memory of a server (such as server 403 in FIG. 4) and the limited broadcast bandwidth (e.g. from broadcast carousel 603 in FIG. 6), it may be necessary to limit the period of time over which clips are available for download. For example, it may only be possible to download clips which relate to programmes broadcast in the preceding two weeks. This enables the overall number of clips being stored / broadcast to remain substantially constant with new clips replacing the older clips as clips are generated.

Whilst this limit of clip availability will not impact the ability to share clips where the clip data transferred between mobile devices comprises the clip itself, where the clip data comprises an address or other identifier for the clip such that the receiving mobile device needs to download the clip in order to be able to display it, sharing may be limited after a period of time because this download may no longer be possible. As a result of this, the length of time that a clip is available for download may be varied based on the popularity of the clip (e.g. the number of times it is downloaded or shared or the number of times a licence is requested) such that more popular clips remain available for longer than less popular clips. In an example, a clip may remain available for a fixed period after it has last been downloaded (e.g. one week), such that a clip which remains popular over a long period of time will remain available whereas a clip which, although it might be initially popular, is not of long term interest, will be removed once it is no longer being downloaded. It will be appreciated that these feedback mechanisms are provided by way of example only and other mechanisms may be used instead and it will be further appreciated that such a threshold for removal of a clip from memory / broadcast may be set at any level dependent upon the available storage space / broadcast capacity and / or on any other aspect of the service.

### The client application

The mobile device may run a client application which provides a means for the user to initiate the grabbing of a clip (e.g. by means of a soft key). The client application may include an EPG and the means for initiating the grabbing of a clip may, in some examples, be integrated with the EPG such that the user indicates the required channel as part of the trigger to capture a clip. The application may also comprise a means of viewing the user's library of clips (i.e. those clips stored on the device or those clips for which clip data is stored on the device). This application may use the representative still image of each clip to provide a visual representation of the clips in the library and to enable the user to easily select the clip of interest to be watched / shared. The application may also be integrated with a wireless transfer means (e.g. Bluetooth) such that a soft key may be provided to initiate the transfer of clip data to another mobile device (e.g. a first button to play a clip, a second button to share a clip).

In addition to presenting a visual representation of clips for which data is stored on the device, the application may also display to the user one or more links or representative still images for clips which have not been downloaded but which are similar to one or more of the clips which are stored on the device or clips which have otherwise been made available to the mobile device (e.g. selected randomly or selected for the user of the mobile device based on preferences). For example, if the user downloads two clips showing goals scored by a particular football team, the application may identify other clips of goals for the same football team which are available and present these to the user. The clip data may be downloaded upon selection of the new clip by the user. The identification of suitable other clips may be performed by the application itself, which may then automatically access the representative images (and other clip data) for those unrequested clips, or alternatively, the identification of suitable other clips may be performed in the network (e.g. by web server 403) which may then push data relating to those clips (e.g. address, representative image etc) to the mobile device.

In addition to controlling the transmission of clip data from a mobile device to another mobile device, the application may also control the reception of clip data from other mobile devices, such that the representative images of clips received are also shown to the user and that clips received from other devices can be watched / shared in the same way as clips downloaded / received by the device via a network.

### Progressive Download Method

As described above, the clip may be downloaded using a progressive download method. This method may be used for download via broadcast or via any other content distribution network. As described above, the clip to be distributed is divided into a number of segments, each segment containing a number of blocks, as shown schematically in FIG. 8. FIG. 8 shows a clip 800 which is divided into 3 segments 801-803, each comprising 5 blocks. This is by way of example only and the number of blocks may be much larger than the number of segments.

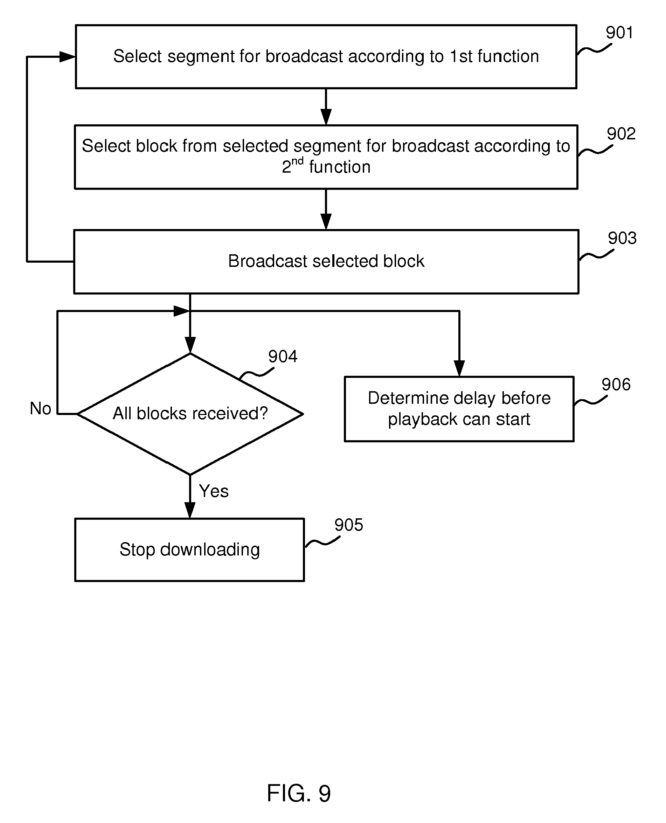

FIG. 9 shows a flow diagram for an example method in which a segment is selected for broadcast according to a first function (step 901) and a block for broadcast is selected from the selected segment according to a second function (step 902). The first and second functions may be the same or different and these two selecting steps are described in more detail below. The selected block of the content is then broadcast or otherwise downloaded (step 903). The process is then repeated (steps 901-903) to download further blocks of the clip.

A receiving mobile device receives blocks which are broadcast (in step 903) and determines whether all blocks from the clip have been received (step 904) and if so the device stops receiving and storing further broadcast blocks (step 905). In parallel to receiving blocks that are being broadcast (in step 903), the mobile device may determine when playback of the clip can commence (step 906) e.g. the amount of time between the start of receiving of blocks and the start of playback, also referred to as the buffer time. This determination may be made after the first block has been received or at any other point and this determination may be made such that playback should preferably not be permitted to start unless the mobile device will be able to play the clip uninterrupted from start to finish, otherwise it will result in a poor user experience. The determination may be made once or may be checked several times. After the required delay (e.g. the buffer time), then the user may be able to watch the clip (step 103 of FIG. 1). This therefore enables the mobile device to playback the clip whilst the mobile device is still downloading later parts of the clip. The selection steps 901, 902 are described in more detail below.

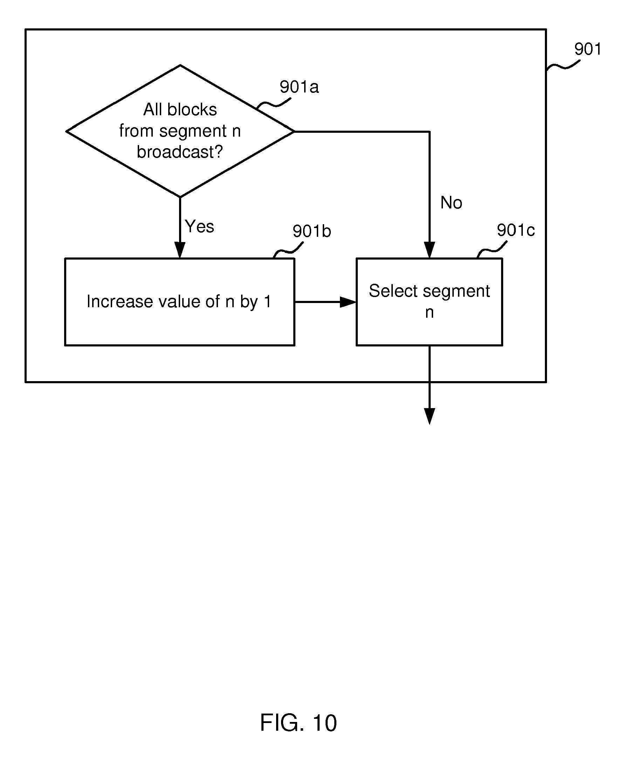

The selection of the segment and / or the block (step 901 and / or step 902) may be made from all the segments / blocks in the clip. In an example, the segments are selected sequentially (in step 901) such that all the blocks from the first segment are broadcast before any blocks from the second segment are broadcast, as can be described with reference to FIG. 10. Initially, before any blocks are broadcast, n is set equal to 1 (not shown in FIG. 10). According to this example of the first function, the broadcasting server (which may replace carousel 603 in FIG. 6) checks whether all the blocks from segment n (e.g. the first segment) have been broadcast (step 901a) and if they have not, the same segment, n (e.g. the first segment) is selected (step 901c). If however it is determined (in step 901a) that all the blocks from segment n have been broadcast, then the value of n is increased by one (step 901b, e.g. the value of n is increased from one to two) and the new segment n (e.g. the second segment) is then selected (in step 901c). The block for broadcast from the selected segment may then be selected (in step 902) substantially at random (e.g. second function = substantially random function). Such a process of sequential segment selection and substantially random block selection achieves significantly higher efficiency than pure sequential broadcast of blocks. Furthermore, the process achieves smaller buffer times before playback can commence.

Once all blocks from all segments of the clip have been broadcast, the broadcast of the clip may stop or alternatively, the process may be repeated (e.g. n set back to 1 and the selection process of FIG. 10 started afresh) one or more times until broadcast of the clip is terminated. The determination of when to cease broadcast of a clip may be based on the popularity of the clip or other parameter (as described above).

It will be appreciated that FIG. 10 and the related description provides only one example of a pair of suitable selection functions (i.e. the first and second functions).

### Example implementations

In an example implementation, clips may be generated using Windows Media Encoder running on a PC with an Osprey Capture card. The card may be fed by a consumer level Set-Top Box or a production quality Integrated Receiver Decoder. In this example, the content may be encoded at a constant bit-rate for a QVGA (Quarter Video Graphics Array) screen (i.e. 320 x 240 pixels) to suit a particular type of mobile device (e.g. SmartPhones). Such encoding provides a resulting bit rate of about 260kb/s with 64kb/s of that made up of audio, such that a two minute clip takes less that 4MB of storage space. The thumbnail images used to represent the clips in the UI (user interface) may be derived from the clips using a Video Thumbnail algorithm.

The encoded clip and any thumbnail may then be uploaded to a web server and / or to a broadcast carousel (as shown in FIGS. 4 and 6). In such an example, the carousel may play out simultaneously across the broadcast networks DAB-IP and DVB-H. Storage may be managed so that the clips do not exhaust their allotted space by removing older content as directory size constraints are approached. In some examples, clips may be marked for retention if required (e.g. if very popular).

In this example, the application on the mobile device may comprise an Online Media Guide (OMG) from which clips can be downloaded and a Mobile Clip Manager (MCM) that enables the organization and sharing of clips on the mobile device. The OMG may be designed to be device agnostic supporting a scalable rendering interface that can accommodate access by older mobile devices with low resolution displays of 100 x 100 pixels and devices with 320 x 240 pixel displays. Interface scaling may be achieved using a combination of smart downsizing and up-scaling of all user interface elements to increase accessibility across many devices.

The MCM may comprise an in built technique for sharing clips among friends in close proximity (~10 metres) using Bluetooth's OBEX (Object Exchange) communication protocols to enable clip transfers to nearby Bluetooth enabled devices (such as mobile phones, laptops or other mobile devices) regardless of operating system or device manufacturer.

FIG. 1 1 shows a schematic diagram of a mobile device suitable for implementation of the methods described above. The mobile device 1100 comprises a processor 1101, a wireless transmitter 1102 and receiver 1103 (which may be combined as a transceiver), a user input means 1104 and a display 1105. The user input means may comprise any suitable means including, but not limited to, a keyboard, one or more buttons, a joystick and a touch screen. The mobile device further comprises memory 1106 which may comprise memory integrated within the device and / or removable computer readable media. This memory is arranged to store executable instructions to cause the processor 1101 to perform one or more steps from the methods described above. The memory 1106 may comprise one or more of an operating system 1107, a client application 1108, a clip store 1109 (which may comprise a database of clips) and an image store 1110.

Although the present examples are described and illustrated herein as being implemented in a broadcast or point to point system (as shown in FIGS. 4 and 6), the systems described are provided as an example and not a limitation. As those skilled in the art will appreciate, the present examples are suitable for application in a variety of different types of content distribution systems, including systems which use peer-to-peer methods.

Whilst the description above refers to audio-visual material and television programs, it will be appreciated that the methods described may be applicable to any audio, visual, audio-visual or other multimedia broadcast content including advertisements, radio broadcasts, broadcast gaming media etc.

The term 'broadcast' is used herein to refer to the substantially simultaneous transmission of data to more than one destination, irrespective of whether the data is being transmitted for the first time or is being re-broadcast for any reason. This includes multicast transmissions which involve transmission of data to multiple recipients but not to everyone. The term 'broadcast' is also intended to encompass services such as time shifting and near Video on Demand in which a programme is broadcast multiple times with varying start times (e.g. every 10 minutes).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

Any range or device value given herein may be extended or altered without losing the effect sought, as will be apparent to the skilled person.

It will be understood that the benefits and advantages described above may relate to one embodiment or may relate to several embodiments. It will further be understood that reference to 'an' item refer to one or more of those items.

The steps of the methods described herein may be carried out in any suitable order, or simultaneously where appropriate.

It will be understood that the above description of a preferred embodiment is given by way of example only and that various modifications may be made by those skilled in the art. The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention.

## Claims

1. A method of capturing media clips on a mobile device comprising:
in response to a user input received by the mobile device, identifying a media clip for capture;
accessing clip data for the identified media clip; and
storing the clip data on the mobile device.

2. A method according to claim 1, further comprising:
providing an interface for navigation to and selection of a clip stored on the mobile device.

3. A method according to any of the preceding claims, wherein identifying a media clip for capture comprises:
determining a time of the user input; and
identifying the media clip based on the time of the user input.

4. A method according to claim 3, wherein identifying a media clip for capture further comprises:
determining a broadcast channel being watched by the user; and
wherein the media clip is identified based on the time of the user input and the broadcast channel.

5. A method according to any of claims 1-4, wherein the clip data comprises a media file for the identified media clip and wherein accessing clip data for the identified media clip comprises:
accessing the media file for the identified media clip.

6. A method according to claim 5, wherein accessing the media file for the identified media clip comprises:
receiving the media file over a broadcast channel.

7. A method according to claim 5, wherein accessing the media file for the identified media clip comprises:
downloading the media file from a server.

8. A method according to any of claims 5-7, further comprising:
in response to a user input received by the mobile device selecting the identified clip, playing the media file.

9. A method according to any of the preceding claims, wherein the clip data further comprises a representative still image for the clip.

10. A method according to any of the preceding claims, further comprising:
in response to a user input received by the mobile device selecting a stored clip, transmitting the stored clip to another mobile device over a wireless link.

11. A method according to any of the preceding claims, further comprising:
accessing a licence for the identified clip.

12. A computer program comprising computer program code means adapted to perform all the steps of any of the preceding claims when said program is run on a computer.

13. A computer program as claimed in claim 12 embodied on a computer readable medium.

14. A mobile device (1100) comprising:
a processor (1101);
a wireless transmitter (1102) and receiver (1103);
a user input means (1104);
a display (1105); and
a memory (1106) arranged to store executable instructions arranged to cause the processor (1101) to:
identify a media clip for capture in response to receipt of an input via the user input means;
access clip data for the identified media clip; and
store the clip data in the memory.

15. A mobile device according to claim 14, wherein the memory is further arranged to store executable instructions arranged to cause the processor to:
access a licence for the identified media clip.

16. A mobile device according to claim 14 or 15, wherein the memory is further arranged to store executable instructions arranged to cause the processor to:
provide an interface for navigation to and selection of a clip stored on the mobile device.

17. A mobile device according to any of claims 14 to 16, wherein the memory (1106) is further arranged to store executable instructions arranged to cause the processor (1101) to:
transmit a stored clip to a second mobile device via the wireless transmitter (1102) in response to a user input received via the user input means, the input identifying the stored clip.

18. A method of enabling capture of media clips on a mobile device comprising:
generating a plurality of clips from broadcast media; and
distributing the plurality of clips to mobile devices.

19. A method according to claim 18 , wherein distributing the plurality of clips to mobile devices comprises:
storing the plurality of clips on a server; and
in response to a request from a mobile device, downloading one of the plurality of clips from the server to the mobile device.

20. A method according to any of claims 18-19, wherein distributing the plurality of clips to mobile devices comprises:
selecting at least two of the plurality of clips;
dividing each of the selected clips into a plurality of blocks; and
sequentially broadcasting one of the plurality of blocks from each of the selected clips.
